# EUROPÄISCHE PATENTSCHRIFT

(11) **EP 1 076 614 B1**
(45) Veröffentlichungstag und Bekanntmachung des Hinweises auf die Patenterteilung: **24.04.2002**
(21) Anmeldenummer: 99920441.5
(22) Anmeldetag: 06.05.1999
(51) Int. Cl.: B60K 17/28

(54) **VERFAHREN ZUM STEUERN EINER ZAPFWELLE EINES SCHLEPPERS**
METHOD FOR CONTROLLING A POWER TAKE-OFF SHAFT OF A TRACTOR
PROCEDE POUR COMMANDER UNE PRISE DE FORCE D'UN TRACTEUR

(30) Priorität: 06.05.1998 AT 29398 U
(43) Veröffentlichungstag der Anmeldung: 21.02.2001
(73) Patentinhaber: Case Steyr Landmaschinentechnik GmbH, 4300 St. Valentin (AT)
(72) Erfinder: ZIBUSCHKA, Alfred, A-4020 Linz (AT); HRAZDERA, Oliver, A-4470 Enns (AT)
(74) Vertreter: Feldkamp, Rainer, Dipl.-Ing.
(86) Internationale Anmeldenummer: AT9900112
(87) Internationale Veröffentlichungsnummer: WO9956978

(56) Entgegenhaltungen:
- EP-A- 0 517 384
- EP-A- 0 696 524
- EP-A- 0 697 303
- DE-A- 4 001 398

## Beschreibung

Die Erfindung handelt von einem Verfahren zum Steuern des Antriebes einer Zapfwelle eines Schleppers, bei dem die Zagfwelle mittels einer Zapfwellenkupplung mit einem Antriebsmotor verbindbar ist und der Schlepper ein hydraulisches Hubwerk besitzt, an das eine von der Zapfwelle angetriebene Arbeitsmaschine kuppelbar, und wobei die Zapfwellenkupplung mittels eines getakteten Steuerventiles schließbar ist.

Die Zapfwelle ist eine schnelldrehende und ein hohes Drehmoment übertragende Arbeitswelle. Sie und angeschlossene Arbeitsmaschinen sind für den Landwirt eine erhebliche Gefahrenquelle. Bei Verstopfung oder anderer Behinderung der Arbeitsmaschine muß er sie ausheben und den Führerstand verlassen, um Abhilfe zu schaffen. Oft sind dazu auch Bedienungselemente ausserhalb des Führerstandes vorgesehen. Zur Erhöhung der Sicherheit in solchen Situationen ist es aus der Praxis bekannt, bei Ausheben der Arbeitsmaschine selbsttätig die Zapfwellenkupplung zu öffnen.

Aus der DE 40 01 398 A1 ist eine Steuerung einer Zapfwellenkupplung eines Traktors bekannt, die ein getaktetes Steuerventil der Zapfwellenkupplung in Abhängigkeit von vorgegebenen Grenzwerten betätigt. Wenn der Schlupf in der Zapfwellenkupplung oder die Höhenauslenkung des Hubwerkes einen vorgegebenen Wert überschreitet, wird sie geöffnet. Damit sollen kritische Betriebszustände und erhöhter Verschleiß hintangehalten werden. Eine funktionelle Verknüpfung von Zapfwellenkupplung und zugehörigem Hubwerk besteht nur insofern, als die Zapfwellenkupplung beim Ausheben des Hubwerkes gelöst wird. Ein automatisches Wiedereinrücken der Zapfwellenkupplung ist nicht vorgesehen, sodass auch keine Sicherheitsfragen zur Sprache kommen, die differenziertere Sicherheitsvorrichtungen erfordern würden.

Differenziertere Sicherheitsvorrichtungen gelten wegen befürchteter Funktionsstörungen als bedenklich, obwohl sie eine erwünschte Erhöhung des Bedienungskomforts mit sich bringen können. Man denke etwa an das Wenden am Rain, wo neben der Fahrzeugbedienung auch Hubwerk und Zapfwellenkupplung zu betätigen sind. Dabei kann es auch zu rauher Bedienung kommen, was die Lebensdauer von Fahrzeug und Arbeitsmaschine verringert.

Es ist daher das Ziel der Erfindung, ein Verfahren zur selbsttätigen Steuerung einer Zapfwelle anzugeben, das volleWahrung der Sicherheit und Schonung des Materiales in allen Situationen bietet, und das mit möglichst geringem technischen Aufwand. Erfindungsgemäß wird das durch die folgenden Verfahrensschritte erreicht (die Bezugszeichen beziehen sich auf die Abbildungen):
a) Bei Betätigen eines Schalters (11) zum Einschalten der Zapfwelle wird die Zapfwellenkupplung (2) mittels eines pulsweitenmodulierten Ein/Aus-Ventiles (16) geschlossen, sodaß diese gesteuert anläuft,
b) Wird in der Folge ein Schalter (12) zum Übergang auf einen automatischen Modus betätigt, so wird beim Anheben des Hubwerkes (7) die Zapfwellenkupplung (2) gelöst; wird nicht angehoben, bleibt die Zapfwellenkupplung (2) geschlossen,
c) Wird innerhalb einer vorbestimmten Zeitspanne das Hubwerk (7) wieder abgesenkt, so wird die Zapfwellenkupplung (2) automatisch wieder geschlossen, nach Ablauf dieser Zeitspanne nicht mehr.

Eine derartige Steuerung ermöglicht sanftes Anlaufen nach einem vorbestimmten Pulsweitengradienten bzw Drehzahlgradienten und in Abhängigkeit von der abgezapften Drehzahl, wobei wegen der Pulsweitenmodulation ein einfaches und billiges Ein/Aus-Ventil eingesetzt werden kann. Der automatische Betrieb ist nicht zwangsläufig, er kann als Betriebsmodus auf Wunsch auch nach einer Weile im nicht automatischen Modus angewählt werden. Dem ist sicherheitstechnisch dadurch Rechnung getragen, daß nach Anwählen des automatischen Modus der Zustand des Hubwerkes abgefragt wird. Ist es abgehoben, so wird die Zapfwelle ausgekuppelt, so wie bei den bekannten Vorrichtungen, jedoch ohne zusätzlichen Aufwand. Die vorbestimmte Zeitspanne, innerhalb derer im automatischen Modus beim Absenken die Zapfwelle automatisch wieder eingekuppelt wird, ist so gewählt, daß gerade Zeit zum Wenden am Rain ist, beim Absenken nach einer Arbeitsunterbrechung oder nach dem Aussteigen jedoch kein automatisches Anlaufen der Zapfwelle mehr erfolgt. Damit ist die für die Koppelung von Hubwerk- und Zapfwellenschaltung erforderliche Sicherheit gewährleistet.

Dadurch, daß das erfindungsgemäße Verfahren softwaremäßig implementiert ist, ist der technische Mehraufwand minimal. Dadurch auch kann das automatische Einschalten bei Absenken nach einer vorbestimmten Zeitspanne von weiteren Sicherheitskontrollen abhängig gemacht werden.

Bereits beim gesteuerten Anlaufen kann eine Sicherheitsmaßnahme eingeplant sein: das Anlaufen der Zapfwelle wird durch Lösen der Kupplung so-5 fort unterbrochen, wenn der Schalter zum Einschalten nicht während eines bestimmten Zeitintervalles betätigt bleibt (Anspruch 2). Beobachtungen haben ergeben, daß Fehlbedienungen bereits während sie geschehen erkannt werden, aber eben bereits eine Sekunde zu spät. Man kann sie aber vermeiden, wenn man den Fahrer zwingt, den Schalter bewußt und für eine bestimmte Zeit zu betätigen.

Vorzugsweise erfolgt das Kuppeln der Zapfwelle während einer bestimmten ersten Zeitdauer weich und erst nach dieser Zeitdauer kann auf den automatischen Modus umgeschaltet werden (Anspruch 3). Besonders stoßfreier und schonender Anlauf der Zapfwelle wird dadurch erreicht, daß beim gesteuerten Anlauf der Zapfwelle deren augenblickliche Drehzahl berücksichtigt wird (Anspruch 4). Dazu wird diejenige Pulsweite berücksichtigt, bei der sich die Zapfwelle zu bewegen beginnt (Anspruch 5). Es wird eine Anfangspulsweite vorgegeben und solange vergrößert, bis sich die Zapfwelle merklich bewegt. Der daran anschließende Teil wird langsam durchfahren.

In einer Weiterbildung des Verfahrens wird beim Einschalten der Zapfwelle nach einer bestimmten zweiten Zeitdauer, die länger als die erste Zeitdauer ist, abgefragt, ob sich die Zapfwelle auch tatsächlich dreht; andernfalls wird die Zapfwellenkupplung sofort wieder ganz gelöst (Anspruch 6). Diese Maßnahme dient nicht nur dem Schutz der Kupplung vor Überlastung und übermäßigem Verschleiß, sondern auch dem Schutz des Landwirtes. Bei tiefen Aussentemperaturen kann es nämlich geschehen, daß die Zapfwelle mit großer Verzögerung anläuft und der Landwirt nachschaut, warum die Zapfwelle nicht anläuft. Dabei sind immer wieder schwere Unfälle passiert.

In einer bevorzugten Verfahrensweise wird nach dem Ausheben des Hubwerkes abgefragt, ob der Schlepper fährt oder stillsteht; fährt er, so wird die Kupplung nur dann automatisch wieder geschlossen, wenn innerhalb einer vorbestimmten ersten Zeitspanne das Hubwerk wieder abgesenkt wird: steht er still, so wird die Kupplung nur dann automatisch wieder geschlossen, wenn innerhalb einer vorbestimmten zweiten Zeitspanne das Hubwerk wieder abgesenkt wird; wobei die vorbestimmte zweite Zeitspanne kürzer als die vorbestimmte erste Zeitspanne ist (Anspruch 7). Somit ist die Zeitspanne selektiv. Bei Stillstand ist sie kürzer als die Zeit, die der Fahrer braucht, um aus dem Führerstand zu klettern. Während der Fahrt ist sie lang genug für ein Wendemanöver am Rain.

Wenn der Schlepper zusätzlich über ausserhalb des Führerstandes angebrachte Schalter für das Hubwerk verfügt, wird in einer sehr sicherheitsrelevanten Weiterbildung des Verfahrens die Zapfwellenkupplung sofort gelöst und der automatische Modus ausgeschaltet, sobald einer der Schalter ausserhalb des Führerstandes bedient wird (Anspruch 8). Wenn der Fahrer im Falle einer Betriebsstörung stehenbleibt, aussteigt und von aussen die Arbeitsmaschine aushebt, ist absolut (weil auch der automatische Modus ausgeschaltet wird) sichergestellt, dass die Arbeitsmaschine auf jeden Fall stillsteht. Die Betriebsstörung kann dann ohne Unfallrisiko behoben werden. Der automatische Modus kann erst wieder aktiviert werden, wenn der Fahrer wieder im Fahrerhaus Platz genommen hat.

In einer Weiterbildung des Verfahrens wird vor dem Einschalten der Zapfwellenkupplung die Motordrehzahl abgefragt; und mit dem Einschalten nur begonnen, wenn die Motordrehzahl in einem bestimmten Drehzahlbereich liegt (Anspruch 9). Dadurch werden einerseits Stöße und andererseits Abwürgen des Motors verhindert.

Schließlich liegt es im Rahmen der Erfindung, die Steuerung über einen entsprechend den vorhergehenden Ansprüchen programmierten Prozessor auszuführen (Anspruch 10). Obwohl die Ausführung auch hardwaremäßig möglich ist, ist sie als Prozessorsteuerung besonders einfach und den jeweiligen Fahrzeugerfordernissen leicht anpassbar.

Im Folgenden wird die Erfindung anhand von Abbildungen beschrieben und erläutert. Es stellen dar:
Fig. 1: einen Schlepper mit Steuerung, schematisch,
Fig.2: ein Flußschaubild einer Betriebsphase,
Fig.3: ein Flußschaubild im automatischen Modus, und
Fig.4: ein Flußschaubild mit weiteren Sicherheitsfunktionen.

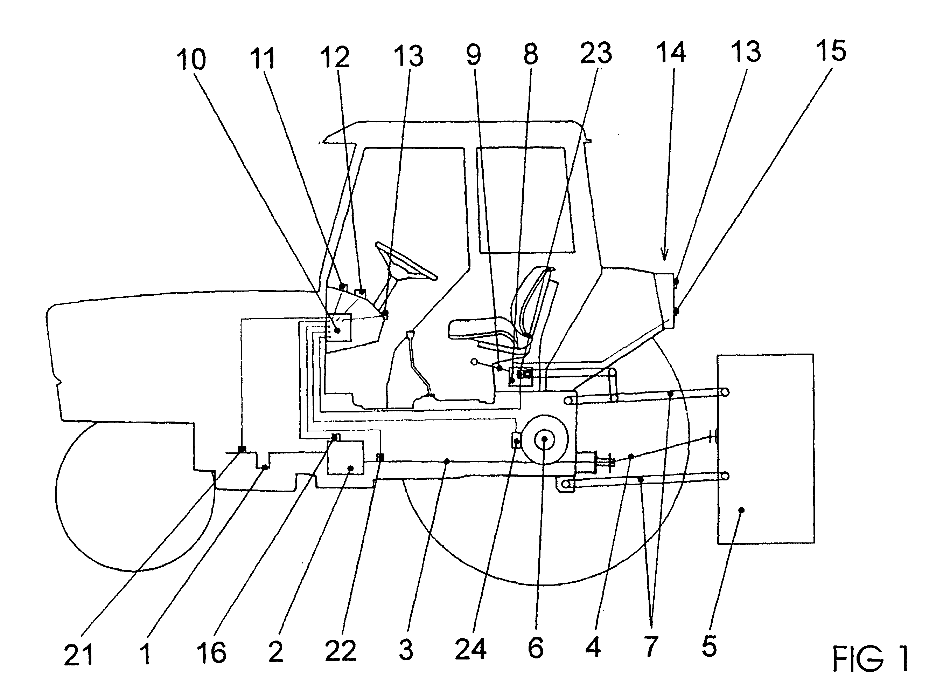

In Fig. 1 ist der Motor nur angedeutet und mit 1 bezeichnet. An ihn schließt eine Zapfwellenkupplung 2 an, gegebenenfalls gefolgt von einem nicht dargestellten Stufengetriebe zur Wahl der Zapfwellennenndrehzahl (540,750, 1000 oder 1400 U/min). Die Zapfwellenkupplung 2 ist eine hydraulisch betätigte Kupplung beliebiger Bauart, etwa trocken- oder naßlaufend, mit einer oderer mehreren Scheiben. Von dieser führt eine Zapfwelle 3 zur Gelenkwelle 4 einer von ihr angetriebenen Arbeitsmaschine 5. Die Hinterachse 6 des Schleppers ist nur angedeutet. Am Schlepper befindet sich weiters ein Hubwerk 7, das von einer Hubwerkshydraulik 8 bewegt wird, die einem Hubwerkshebel 9 in der Nähe des Fahrersitzes gehorcht. Im gezeigten Ausführungsbeispiel ist Hubwerk und Zapfwelle am Heck des Schleppers angeordnet, sie könnten auch am Bug des Schleppers angeordnet sein.

Im Schlepper ist an geeigneter Stelle ein Steuergerät 10 für die Zapfwellenkupplung vorgesehen. Es enthält einen Prozessor, der das erfindungsgemäße Steuerprogramm repetitiv abarbeitet und ist über nur angedeutete Leitungen mit den im folgenden aufgezählten Bedienungsorganen und Sensoren verbunden: einem Schalter 11 zum Einschalten der Zapfwelle, vorzugsweise einem Taster; einem Schalter 12 zum Einschalten des automatischen Modus, vorzugsweise mit zwei Stellungen; einem Schalter 13 zum Ausschalten der Zapfwelle, einen Taster; einem zusätzlichen an einer von außerhalb des Fahrzeuges zugänglichen Schaltkonsole 14 angebrachten Schalter 13' zum Ausschalten der Zapfwelle, zusammen mit einem zusätzlichen Bedienungselement 15 für das Hubwerk 7; einem Schaltventil 16 für die Zapfwellenkupplung, es ist ein pulsweitenmoduliertes Ein/Aus-Ventil; einem Sensor 21 für die Motordrehzahl; einem Sensor 22 für die Zapfwellendrehzahl; einem Sensor 23 für die Position des Hubwerkes und einem Sensor 24 für die Drehzahl der Hinterachse bzw. die Geschwindigkeit des Schleppers.

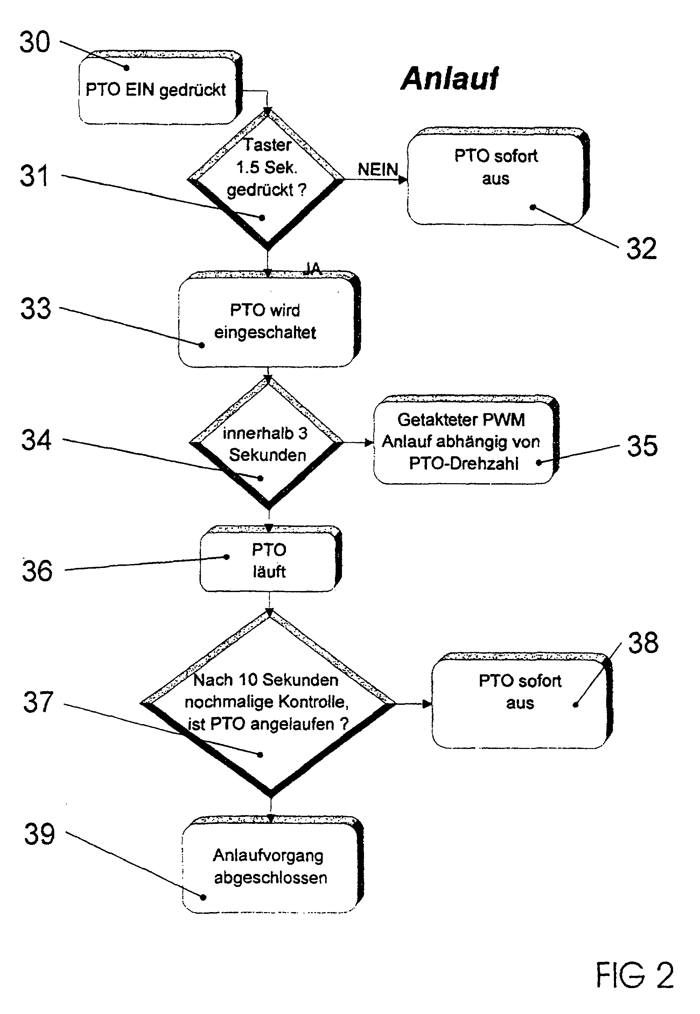

Fig. 2 zeigt die Verfahrensschritte beim Einschalten und Anlauf der Zapfwelle. Um den Anlauf einzuleiten, wird der Taster 11 gedrückt (Feld 30). Entsprechend Feld 31 wird abgefragt, ob der Taster 11 während eines ersten Zeitintervalles (etwa 1,5 Sekunden) gedrückt bleibt. Wird der Taster 11 vorher ausgelassen, so wird der Befehl nicht angenommen, Feld 32. Wird der Taster 11 lange genug gedrückt, wird das Ventil 16 für den Anlauf der Zapfwelle angesteuert, Feld 33. Innerhalb einer ersten Zeitdauer erfolgt der Anlauf durch Ansteuern des pulsweitenmodulierten Ventiles 16 entsprechend einer gespeicherten Anlauffunktion (Felder 34,35). Zur stoßfreien Steuerung des Anlaufes wird der Anlauf der Zapfwellenkupplung 2 von jener Pulsweite bzw jenem Zeitpunkt beeinflußt, zu dem sich die Zapfwelle zu bewegen beginnt, was dem Steuergerät 10 über den Sensor 22 gemeldet wird. Dann sollte die Zapfwelle laufen (Feld 36). Um das sicherzustellen wird nach einer zweiten Zeitdauer (etwa 10 oder 20 Sekunden) gemäß Feld 37 anhand der vom Sensor 22 gemeldeten Drehzahl der Zapfwelle noch einmal überprüft, ob die Zapfwelle tatsächlich angelaufen ist. Tut sie das nicht, wird die Zapfwellenkupplung 2 sofort wieder gelöst (Feld 38). Ist die Kontrolle in Feld 37 positiv, so ist der Anlaufvorgang abgeschlossen, Feld 39.

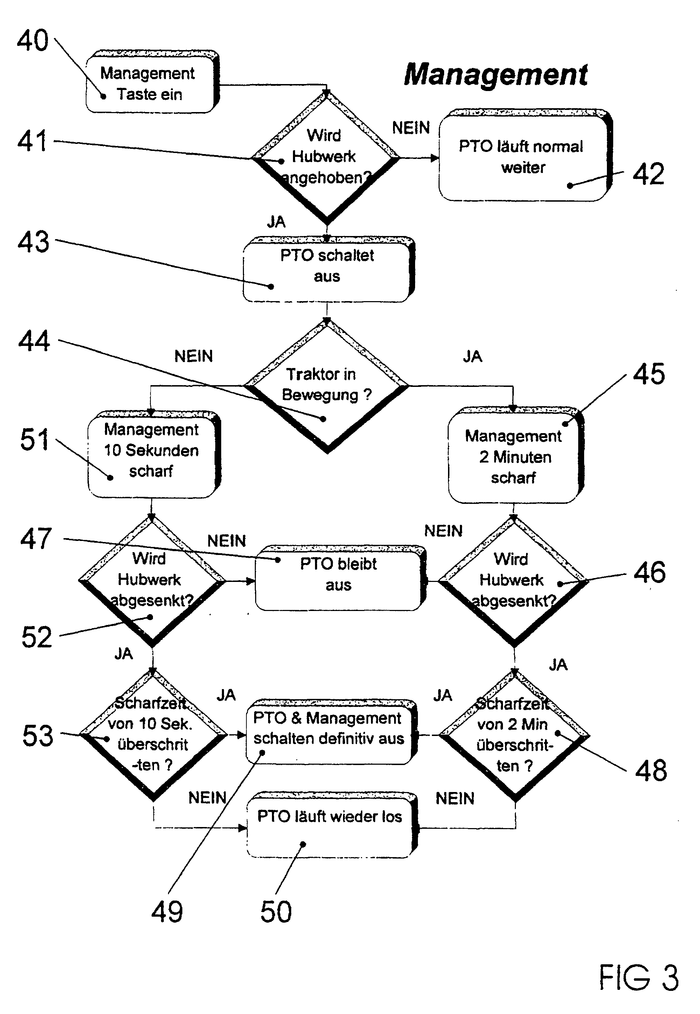

Fig.3 zeigt den Verfahrensablauf im automatischen Modus, hier auch "Management" genannt. In diesen Modus kann erst geschaltet werden, wenn die Zapfwelle bereits angelaufen ist. Dazu wird Schalter 12 (Fig.1) in die Stellung "Management-Taste Ein" (Feld 40) gebracht. Zur Sicherheit wird gemäß Feld 41 gefragt, ob das Hubwerk angehoben ist oder wird. Wenn nicht, so läuft die Zapfwelle normal weiter (Feld 42), bis zu einem beliebigen späteren Zeitpunkt das Hubwerk durch Betätigen des Hubwerkhebels 9 angehoben wird. Dieses Anheben wird im Steuergerät 10 vom Sensor 23 gemeldet. Sobald es gemeldet ist, wird die Zapfwellenkupplung 2 gelöst und damit der Zapfwellenantrieb ausgeschaltet.

Für das automatische Wiedereinschalten der Zapfwelle bei Absenken des Hubwerkes ist eine Fallunterscheidung zwischen zwei Betriebszuständen getroffen. Dazu wird zuerst in Feld 44 über den Sensor 24 abgefragt, ob sich der Schlepper in Bewegung befindet. Befindet er sich in Bewegung, wird ein Zeittor geöffnet (Feld 45), sodaß das automatische Wiedereinschalten der Zapfwelle nur erfolgt, wenn innerhalb der mit diesem Zeittor bestimmten ersten Zeitspanne das Hubwerk wieder abgesenkt wird. Wird das Hubwerk nicht abgesenkt (Feld 46) so bleibt die Zapfwelle jedenfalls ausgeschaltet (Feld 47). Wird das Hubwerk abgesenkt, so wird in Feld 48 abgefragt, ob die erste Zeitspanne überschritten wurde. Wurde sie überschritten, so wird sowohl die Zapfwelle als auch der automatische Modus ausgeschaltet. Wurde sie nicht überschritten, so wird die Zapfwellenkupplung wieder geschlossen, siehe Fig.2 ab Feld 33. Steht der Schlepper jedoch still, ist die vorbestimmte zweite Zeitspanne wesentlich kürzer, etwa 10 Sekunden. Die erste Zeitspanne ist so bemessen, daß nach dem Wenden des Schleppers am Rain eines Feldes und Wiederabsenken des Hubwerkes die Zapfwelle wieder eingeschaltet wird. Die vorbestimmte zweite Zeitspanne ist so bemessen, daß sie abläuft, bevor der Fahrer das Fahrerhaus verlassen haben kann. Es kann dadurch unter keinen Umständen passieren, daß der Fahrer bei Manipulationen an der Arbeitsmaschine verletzt wird.

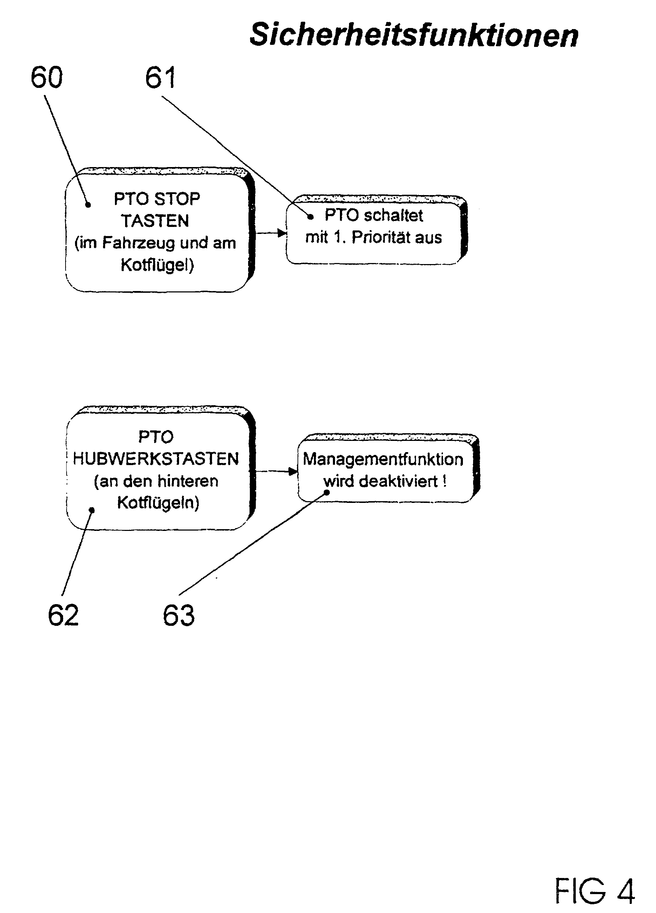

Fig.4 zeigt noch zwei weitere Sicherheitsfunktionen. Gemäß den Feldern 60,61 wird die Zapfwelle mit höchster Priorität ausgeschaltet, wenn irgendeine der Tasten "PTO Stop" 13 oder 13', also entweder die im Führerhaus oder die von außen zugängliche, betätigt wird.

Gemäß Feld 62,63 wird der automatische Modus desaktiviert und damit gleichzeitig auch die Zapfwelle ausgeschaltet, sobald eines der Bedienungsorgane 13',15 der von außen zugänglichen Schalteinheit 14 des Fahrzeuges betätigt wird, also auch wenn nur das Hubwerk allein betätigt wird 15. Oft wird die Schalteinheit 14 ohne das Bedienungsorgan 13' ausgeführt.

Der automatische Modus kann nur von innerhalb der Kabine eingeschaltet werden und wird auch durch Betätigen der Taste "PTO STOP" 13 oder 13' desaktiviert. Dann kann der automatische Modus erst wieder eingeschaltet werden, wenn die Zapfwelle wieder eingeschaltet ist. Auf die beschriebene Weise wird dank der vorliegenden Erfindung absolute Sicherheit mit einem Maximum an Bedienungskomfort vereint.

## Patentansprüche

1. Verfahren zum Steuern des Antriebes einer Zapfwelle eines Schleppers, bei dem die Zapfwelle (3) mittels einer Zapfwellenkupplung (2) mit einem Antriebsmotor verbindbar ist und der Schlepper ein hydraulisches Hubwerk (7) besitzt, an das eine von der Zapfwelle (3) angetriebene Arbeitsmaschine (5) koppelbar und wobei die Zapfwellenkupplung mittels eines getakteten Steuerventiles schließbar ist, bestehend aus folgenden Schritten:
a) Bei Betätigen eines Schalters (11) zum Einschalten der Zapfwelle (3) wird die Zapfwellenkupplung (2) mittels eines pulsweitenmodulierten Ein/Aus-Ventiles (16) geschlossen, sodaß diese gesteuert anläuft,
b) Wird in der Folge ein Schalter (12) zum Übergang auf einen automatischen Modus betätigt, so wird beim Anheben des Hubwerkes (7) die Zapfwellenkupplung (2) gelöst; wird nicht angehoben, bleibt die Zapfwellenkupplung (2) geschlossen,
c) Wenn innerhalb einer vorbestimmten Zeitspanne das Hubwerk wieder abgesenkt wird, so wird die Zapfwellenkupplung (2) automatisch wieder geschlossen, nach Ablauf dieser Zeitspanne nicht mehr.

2. Verfahren nach Anspruch 1, **dadurch gekennzeichnet, daß** beim Einschalten der Zapfwelle (3) das Anlaufen der Zapfwelle durch Lösen der Kupplung (2) sofort unterbrochen wird, wenn der Schalter (11) zum Einschalten nicht während eines bestimmten Zeitintervalles betätigt bleibt.

3. Verfahren nach Anspruch 2, **dadurch gekennzeichnet, daß** das Einschalten der Zapfwelle (3) während einer bestimmten ersten Zeitdauer erfolgt und daß erst nach dieser auf den automatischen Modus umgeschaltet werden kann.

4. Verfahren nach Anspruch 1, **dadurch gekennzeichnet, daß** beim gesteuerten Anlauf der Zapfwelle (3) ihre augenblickliche Drehzahl berücksichtigt wird.

5. Verfahren nach Anspruch 4, **dadurch gekennzeichnet, daß** dabei diejenige Pulsweite berücksichtigt wird, bei der sich die Zapfwelle (3) zu bewegen beginnt.

6. Verfahren nach Anspruch 3, **dadurch gekennzeichnet, daß** beim Einschalten der Zapfwelle nach einer bestimmten zweiten Zeitdauer, die länger als die erste Zeitdauer ist, abgefragt wird, ob sich die Zapfwelle auch tatsächlich dreht; andernfalls wird die Zapfwellenkupplung (2) sofort wieder ganz gelöst.

7. Verfahren nach Anspruch 1, **dadurch gekennzeichnet, daß** nach dem Ausheben des Hubwerkes abgefragt wird, ob der Schlepper fährt oder stillsteht; fährt er, so wird die Kupplung nur dann automatisch wieder geschlossen, wenn innerhalb einer vorbestimmten ersten Zeitspanne das Hubwerk wieder abgesenkt wird; steht er still, so wird die Kupplung nur dann automatisch wieder geschlossen. wenn innerhalb einer vorbestimmten zweiten Zeitspanne das Hubwerk wieder abgesenkt wird; wobei die vorbestimmte zweite Zeitspanne kürzer als die vorbestimmte erste Zeitspanne ist.

8. Verfahren nach Anspruch 1, wobei der Schlepper zusätzlich über ausserhalb des Führerstandes angebrachte Schalter (13',15) für Zapfwelle (3) und Hubwerk (7) verfügt, **dadurch gekennzeichnet, daß** die Zapfwellenkupplung (2) sofort gelöst und der automatische Modus ausgeschaltet wird, sobald einer der Schalter (13',15) ausserhalb des Führerstandes bedient wird.

9. Verfahren nach Anspruch 1, **dadurch gekennzeichnet, daß** vor dem Einschalten der Zapfwellenkupplung (2) die Motordrehzahl abgefragt wird; und mit dem Einschalten nur begonnen wird, wenn die Motordrehzahl in einem bestimmten Drehzahlbereich liegt.

10. Verfahren nach Anspruch 1, **dadurch gekennzeichnet, daß** die Steuerung über einen entsprechend den vorhergehenden Ansprüchen programmierten Prozessor erfolgt.

## Claims

1. A method for controlling the drive of a tractor PTO shaft, wherein said PTO shaft (3) is connectable to a drive engine via a PTO clutch (2), and the tractor comprises a hydraulic power lift (7) to which an implement (5) driven by said PTO shaft (3) may be coupled, and wherein said PTO clutch is engageable my means of a pulsed control valve, **characterized by** the following steps:
a) when a switch (11) is actuated for switching on PTO shaft (3), the PTO clutch (2) is engaged by means of a pulse-width modulated on/off valve (16), so as to start in a controlled manner;
b) if, subsequently, a switch (12) is actuated for switching to automatic mode, the PTO clutch (2) is disengaged when the power lift (7) is raised; if the power lift is not raised, the PTO clutch (2) remains engaged;
c) if the power lift is lowered again within a predetermined time interval, the PTO clutch (2) is automatically engaged again, but not after expiration of this time interval.

2. A method according to Claim 1, **characterized in that** on switching on of the PTO shaft (3), the starting of the PTO shaft is immediately interrupted by disengaging clutch (2) if the switch (11) for initiation does not remain actuated for a predetermined time interval.

3. A method according to Claim 2, **characterized in that** the switching on of the PTO shaft (3) is performed over a predetermined first time interval, and that switching over to the automatic mode only may be performed after the end of this time interval.

4. A method according to Claim 1, **characterized in that** on starting the PTO shaft (3) in a controlled manner, its momentary speed is taken into account.

5. A method according to Claim 4, **characterized in that** the pulse width at which the PTO shaft (3) begins to move is taken into account.

6. A method according to Claim 3, **characterized in that** on switching on the PTO shaft, after a certain second time interval, which is longer than the first time interval, interrogation is done to determine whether the PTO shaft is actually tuming; if not, the PTO clutch (2) is immediately completed disengaged.

7. A method according to Claim 1, **characterized in that** after raising the power lift, interrogation is done to determine whether the tractor is moving or stopped; if it is moving, the clutch is automatically re-engaged only if the power lift is lowered again within a predetermined first time interval; if it is at a standstill, the clutch is re-engaged automatically only if the power lift is lowered again within a predetermined second time interval; the predetermined second time interval being shorter than the predetermined first time interval.

8. A method according to Claim 1, wherein the tractor further comprises switches (13', 15) located externally of the driver's cabin for the PTO shaft (3) and power lift (7), **characterized in that** as soon as one of switches (13', 15) externally of the driver's cabin is actuated, the PTO clutch (2) is immediately disengaged and the automatic mode is switched off.

9. A method according to Claim 1, **characterized in that** before switching on of the PTO clutch (2), the engine speed is interrogated; the starting process being initiated only if the engine speed is within a certain range.

10. A method according to Claim 1, **characterized in that** the control is performed by means of a processor programmed according to the preceding claims.

## Revendications

1. Procédé pour la commande de l'entraînement d'une prise de force d'un tracteur dans lequel la prise de force (3) peut être reliée à un moteur d'entraînement par un accouplement de la prise de force (2) et le tracteur possède un relevage hydraulique auquel un outil (5) entraîné par la prise de force peut être couplé, l'accouplement de la prise de force pouvant être verrouillé à l'aide d'une vanne-pilote synchronisée, comprenant les étapes suivantes:
a) Lors de l'actionnement d'un actionneur (11) pour l'enclenchement de la prise de force (3), l'accouplement de la prise de force (2) est verrouillé au moyen d'un robinet Marche/Arrêt (16) à modulation de la largeur d'impulsion, de manière à ce que ledit accouplement soit mis en mouvement de manière dirigée,
b) Si un actionneur (12) est commandé ensuite pour passer à un mode automatique, l'accouplement de la prise de force (2) est desserré lors du soulèvement du relevage (7) ; en cas de non-soulèvement, l'accouplement de la prise de force (2) reste verrouillé,
c) Si le relevage est de nouveau abaissé dans un délai prédéfini, l'accouplement de la prise de force (2) est reverrouillé automatiquement et ne l'est plus une fois ce délai écoulé.

2. Procédé selon la revendication 1, **caractérisé en ce que**, lors de l'enclenchement de la prise de force (3), le démarrage de la prise de force est interrompu immédiatement par le desserrage de l'accouplement (2) lorsque l'actionneur (11) ne reste pas actionné pendant un intervalle défini pour l'enclenchement.

3. Procédé selon la revendication 2, **caractérisé en ce que** l'enclenchement de la prise de force (3) a lieu pendant un premier intervalle défini et que l'on ne peut passer au mode automatique qu'après cet intervalle.

4. Procédé selon la revendication 1, **caractérisé en ce que**, lors du démarrage commandé de la prise de force (3), on tient compte de sa vitesse de rotation instantanée.

5. Procédé selon la revendication 4, **caractérisé en ce que** l'on tient compte ici de la largeur d'impulsion pour laquelle la prise de force (3) commence à se mouvoir.

6. Procédé selon la revendication 3, **caractérisé en ce que** lors de l'enclenchement de la prise de force après un deuxième intervalle défini, qui est plus long que le premier intervalle, on demande si la prise de force tourne aussi réellement ; dans le cas contraire, l'accouplement de la prise de force (2) est à nouveau complètement desserré.

7. Procédé selon la revendication 1, **caractérisé en ce que**, après le soulèvement du relevage, on demande si le tracteur se déplace ou est à l'arrêt ; s'il se déplace, l'accouplement n'est refermé automatiquement que si dans un premier intervalle défini, l'accouplement est de nouveau abaissé ; s'il est immobile, l'accouplement n'est refermé automatiquement que si, dans un deuxième intervalle prédéfini, le relevage est de nouveau abaissé, le deuxième intervalle prédéfini étant ici plus court que le premier intervalle prédéfini.

8. Procédé selon la revendication 1, le tracteur disposant en outre d'actionneurs (13', 15) disposés à l'extérieur de la cabine de conduite pour la prise de force (3) et le relevage (7), **caractérisé en ce que** l'accouplement de la prise de force (2) est directement desserré et le mode automatique déclenché dès que l'un des actionneurs (13', 15) est commandé à l'extérieur du poste de conduite.

9. Procédé selon la revendication 1, **caractérisé en ce que**, avant l'enclenchement de l'accouplement de la prise de force (2), la vitesse de rotation du moteur est interrogée ; et que l'enclenchement n'est commencé que si la vitesse de rotation du moteur se situe dans un domaine défini.

10. Procédé selon la revendication 1, **caractérisé en ce que** la commande s'effectue via un processeur programmé selon les revendications qui précèdent.
